# EUROPEAN PATENT APPLICATION

(11) **EP 1 318 454 A2**
(43) Date of publication of application: **11.06.2003**
(21) Application number: 02258142.5
(22) Date of filing: 27.11.2002
(51) Int. Cl.: G06F 11/14, G06F 17/30

(54) **Database control system**

(30) Priority: 27.11.2001 JP 2001360424
(71) Applicant: Ricoh Company, Ltd., Tokyo 143-8555 (JP)
(72) Inventor: Hiraoka, Takuya, Tokyo (JP); Takegawa, Hiroshi, Tokyo-to (JP); Asada, Kazushige, Kamifukuoka-shi, Saitama-ken (JP); Ikeda, Tetsuya, Tokyo-to (JP)
(74) Representative: Lamb, Martin John Carstairs

(57) **Abstract**

The present invention provides a database controlling system capable of decreasing the quantity of work of a system manager and saving the capacity of a hard disc of a server by deleting, after backed up data is restored, an unnecessary external file added after commencement of the back up. The database controlling system includes an external file 24 for storing data, such as long and massive data, not ordinarily operated and an external file list storage file 22 for storing a list of the external files. Together with a file of a base page, the external file and external file list storage file 22 are directly accessed and used to produce a back up file 25.

## Description

### BACKGROUND OF THE PRESENT INVENTION:

### 1. Field of the Invention:

This invention relates to a database controlling system, and in particular, to a database controlling system capable of making backup of a database file in a document controlling system, electronic library system, and patent journal retrieval system or the like in accordance with a relational database.

### 2. Discussion of Background Art:

In the past database controlling system, information of canceling and re-executing an operation of are stored in a pair as a transaction per the operation. Such storage contents are called a "log", and are classified in accordance with a type of information to be stored as follows.

First is a logical log, in which both operations having been performed and to be performed in order to cancel the operation are recorded. For example, operations, such as "deletion of a line having a line identifier 10 in an chart A" and "insertion of a line having a line identifier 10 and column values "a", "b", and "c" into an chart A" are recorded in a pair.

Second is a physical log, in which both images before and after updating a page in a file are recorded. In comparison to the logical log, a quantity of information to be recorded is massive. However, both execution and re-execution of an operation are simple due to a mere operation of a page.

Third is a logical and physical eclectic log, in which various types of operations having performed and to be performed in order to cancel the operation with regard to a logical file such as a record file, a B-tree file, etc., forming a chart or index are recorded. Operational contents with regard to a page are recorded upon needs. A quantity of information to be recorded lies almost in the middle between those of the logical and physical logs. In comparison to the logical log, it is easy to determine if an operation recorded in a log is to be applied to a page.
Recovery from medium hazard or medium error is achieved by either re-executing (REDO) or canceling (UNDO) an operation performed after a prescribed time point using a log reading from consistent database maintained at the time point. When the medium hazard is to be recovered, a consistent backed up database is restored, and then an operation performed after backup is started and just before a hazard occurs are recovered while reading a log and performing REDO-UNDO.

Recordation of the log needs to comply with WAL (Write Ahead Logging) protocol. Specifically, every when buffered contents of an updating operation with regard to a database is written into a hard disc of a server, a log of such an operation should be necessarily written into the hard disc. A system hazard or system error is also recovable in a similar manner.

A recovery time period can be shortened by executing a so-called checkpoint process during an operation of a system.

The following procedure executes such a checkpoint process.

First, execution of a transaction and reception of a new transaction are temporary stopped. Second, by entirely writing updating contents of the database, which are buffered but not yet written into a hard disc, consistency (i.e., file contents are of a transactions completed condition) of a file forming a database is assured (established) at this point. Third, every time when a prescribed transaction firstly updates a page after a checkpoint process, a page image before updating is recorded in a physical log. Contents previously recorded in the physical log are junked. Fourth, execution of a transaction and reception of a new transaction are started again.

Since the updating contents of a database, which are buffered to be written, should be entirely written into a hard disc during an operation of the checkpoint process, execution and reception of the transaction should be stopped for a considerably long time period depending upon the circumstances. To shorten this time period, the bel ow described fuzzy checkpoint process has been proposed.

First, execution and new reception of transaction are temporary stopped. Second, updating contents of a database, which are buffered and not yet written into a hard disc even during a proximate fuzzy checkpoint process, are entirely written. Third, updating contents of the database, which are buffered and not yet written into a hard disc are memorized. This is used in the second step of the next fuzzy checkpoint process. Fourth, contents recorded after completion of a twice precedent fuzzy checkpoint process and before start of a proximate fuzzy checkpoint process are entirely junked from a physical log. Fifth, both execution of a transaction and reception of a new transaction are restarted.

Since only updating contents of a database not yet written even in the proximate fuzzy checkpoint are written into a hard disc among those buffered to be written in the fuzzy checkpoint, a processing time period is highly possibly shortened in comparison to a case of a normal checkpoint process.

When a normal checkpoint process is performed, recovery from a system hazard is achieved in the below described manner. First, by writing a page image (before) not updated (and) but recorded in a physical log back to a page updated after completion of the proximate checkpoint process, the database is returned to a condition where the checkpoint process is terminated. Second, an operation of a transaction going at the time of the proximate checkpoint process and to be performed after completion of the checkpoint process is re-executed while a log is read, Third, a transaction not yet completed at a time of hazard is cancelled while a log is read.

During the fuzzy checkpoint process, contents of a database updated before start of a twice precedent checkpoint process are oredibly written into a hard disc. However, contents thereafter are not assured (to be written). Thus, a condition is initially returned to just after completion of the proximate checkpoint process when the normal checkpoint process is performed. In contrast, a condition is initially returned to just after completion of the twice precedent checkpoint process when the fuzzy checkpoint process is employed.

Since the checkpoint process can be performed in a relatively short period of time in comparison to backup of a database, it can be considerably frequently repeated during an operation of a system. Thus, since a number of operations of REDO-UNDO is less than that of recovery processes performed based upon contents of backup.

As a method for making backup of a database in addition to the above, a method, using a file backup device, not via a database controlling system that performs simultaneous control of transactions with a multiple version system, has been proposed.

### SUBJECT OF THE INVENTION TO RESOLVE A PROBLEM

Further, the database controlling system have to make backup of a file forming a database in order to prepare for hazard of a non-volatile memory such as a hard disc. A file forming a database controlling system generally has a complex configuration in order to store multiple objects in the same file. Thus, reading and writing from the file forming the data controlling system are slower in comparison to a case when reading or writing one object from or into a file storing only one object. Thus, the database controlling system occasionally stores long and massive data as an external file in order to read and write such long and massive data at a high speed. In such a case, a backup process becomes complex when a regular user executes multiple transactions. In addition, a quantity of work of a system manager unavoidably increases.

The present invention attempts to resolve these problems and provide a database controlling system in that, backup can be achieved with a simple work schedule by directly accessing a file forming a database even in an ordinary operational condition in which regular users execute multiple transactions. Further, a quantity of work of a system manager can be reduced, and, a capacity of a hard disc can be saved by restoring backup data and then deleting an unnecessary external file added after start of backup.

### SUBJECT RESOLVED BY THE INVENTION

To resolve the above-described problems, the database controlling system of the present invention performs backup of a file forming a database by performing a transaction simultaneous control of a multiple version system when multiple transactions are to be updated to the newest version. Such a database controlling system includes an external file for storing data, such as long and massive data, not normally operated, an external file controlling device for controlling the external file, and an external file list storage file for storing a list of the external files.

Further, together with a file of a base page region storing the oldest version of a page, both the external file and external file list storage file are directly accessed and backed up by a file backup device. Thus, even in a usual operational condition such as when regular users attempt to execute multiple transactions , backup can be performed with a simple work schedule while directly accessing a file forming a database.

Further, according to the other invention of the database controlling system, it is characterized in that together with files of the base page region and the logical log region storing information for use in can cellation and re-execution of an operation with regard to a database, both an external file and external file list storage file are directly accessed and backed up by a file backup device. Thus, even in a normal (usual) operational condition such as when regular users execute multiple transactions, backup can be performed with a simple work schedule while directly accessing a file forming a database.

Further, according to yet another invention of the database controlling system, it is characterized in that, together with the entire files, the external file and external file list storage files are directly accessed and backed up by a file backup device. Thus, even in a usual operational condition where regular users execute multiple transactions, backup can be performed with a simple work schedule while directly accessing a file forming a database.

Further, by deleting an external file not existing in an external file list storage file after backup data is restored, an unnecessary external file added after commencement of backup can be deleted. As a result, a storage capacity of a hard disc or the like can be saved.

### BRIEF DESCRIPTION OF DRAWINGS:

Fig. 1 is a block chart illustrating a database controlling system as one example of the present invention;
Fig. 2 is a block chart illustrating an exemplary hardware of the entire system of the database controlling system according to the present invention;
Fig. 3 is a flowchart illustrating an exemplary query process of the external file controlling device of Fig. 1; and
Fig. 4 is a flowchart illustrating an exemplary process for restoring a backed up file.

### PREFERRED EMBODIMENT:

A database controlling system according to the present invention includes an external file for storing data, such as long and massive data etc., not generally operated, and an external file controlling device for controlling the external file, and an external file list storage file for storing a list of external files.

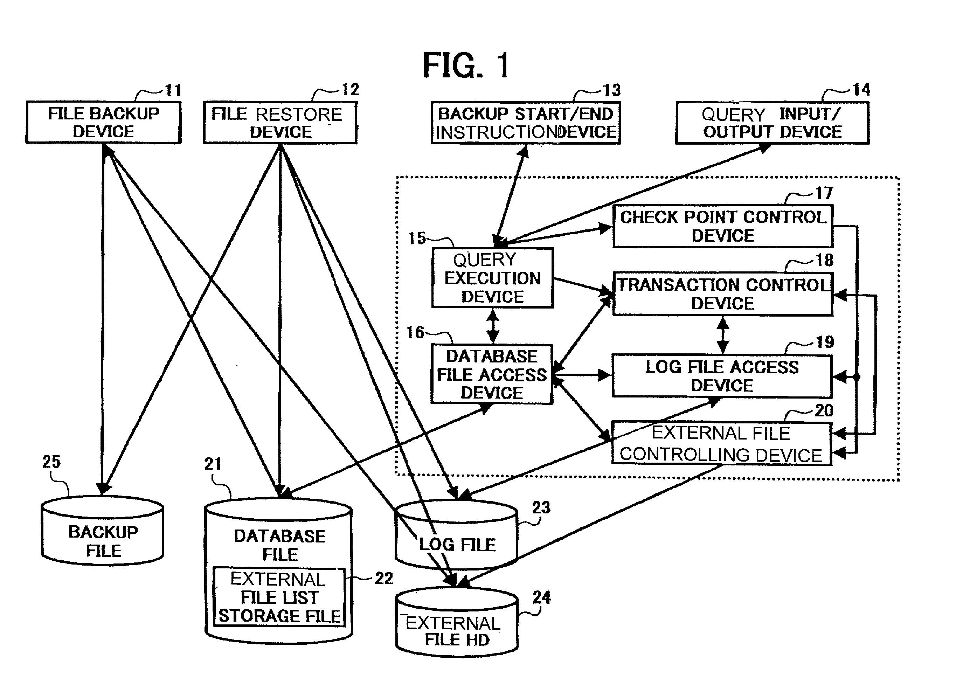

Initially, both soft and hard wares employed in a database controlling system according to the present invention are described. Fig. 1 is a block chart illustrating a construction of a database controlling system as one example of the present invention. As there shown, the database controlling system includes (a file backup device 11, file restore device 12, backup start/end instruction device 13, query input/output device 14,) a query execution device 15, database file access device 16, checkpoint control device 17, transaction control device 18, log file access device 19, and external file controlling device 20(, database file 21 including an external file list storage file 22, log file 23, external file storage HD (Hard Disc) 24 , and backup file 25). Beside the database controlling system, a file backup device 11, file restore device 12, backup start/end instruction device 13, query input/output device 14, database file 21 including an external file list storage file 22, log file 23, external file storage HD (Hard Disc) 24, and backup file 25 are provided.

The file backup device 11 directly accesses and backs up a file forming a database without via the database controlling system. The file restore device 12 directly restores a file forming a database from a non-volatile memory such as a tape without via the data base controlling system. Thebackupstart/endinstruction device 13 instructs the database controlling system to start or terminate backup. The query input/output device 14 receives a query (e.g. deletion, insertion, retrieval) request and outputs its result. The query execution device 15 executes a query sent from the query input/output device 14 using the later described database file access device 16, and returns its result, thereby executing an instruction from the backup start/end instruction device 13. Then, the query execution device 15 (?) records a log in accordance with contents of a query using the later described log file access device 19. The database file access device 16 provides an interface for operating a file forming a database, and performs buffering input/output to and from a hard disc. The buffered contents are written in cooperation with the log file accessing device 19 in conformity to WAL protocol. The checkpoint control device 17 periodically performs the earlier described checkpoint process. The transaction control device 18 starts and terminates a transaction in accordance with a request from the query input/output device 14. As for a transaction to be aborted, the entire operations that the transaction has performed are cancelled by the log file access device 19. Further, a multiple version system performs simultaneous control of a transaction, The log file access device 19 provides an interface for operating the later described log file 23, and buffers input/output to and from a hard disc. The external file controlling device 20 provides an interface for operating the later described external file, and deals with a query to the external file. In addition, the external file controlling device 20 controls (supervises/controls) the external file list storage file 22 via the database file access device 16. The database file 21 stores a data object included in a database. The external file list storage file 22 is one of database files, which store a list of external files 24. The log file 23 stores information required when an operation performed by a transaction is re-executed and cancelled. The log file 23 also stores events that a transaction is started and terminated, and a checkpoint process has been performed. The external file stores data, such as long and massive data, not generally operated. The backup file 25 makes backup of one or more files forming a database.

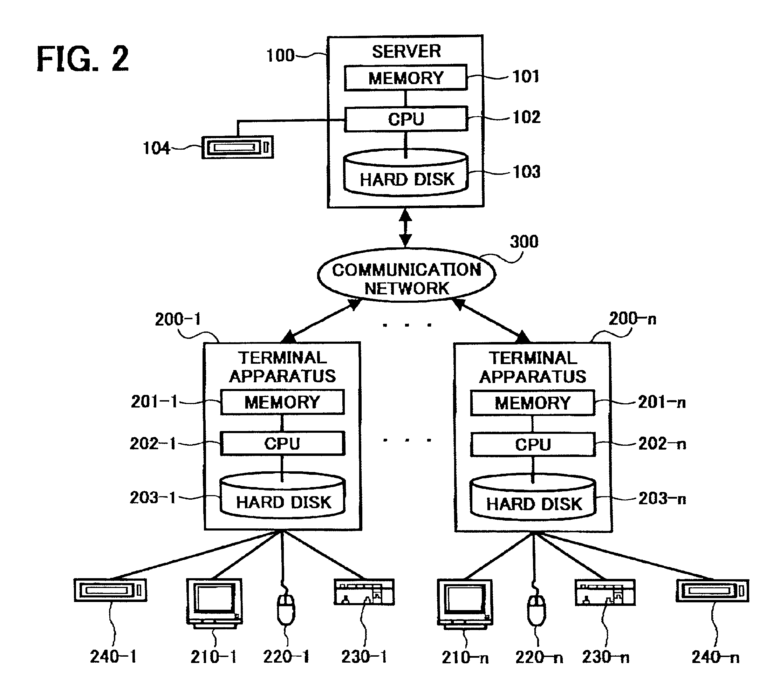

Fig. 2 is a block chart illustrating hardware of the entire system of the database controlling system according to this embodiment. In the drawing, the database controlling system of the embodiment is a system, which is formed from a server 100, and one or more terminal apparatuses 200-1 to 200-n connected to the server 100 via a communication network 300. The server 100 includes a memory 101, CPU102, and hard disc 103, and is capable of executing a program of software. The server 100 is also a computer for executing a query process in accordance with a query request inputted from the terminal apparatuses 200-1 to 200-n, and returning its result to the terminal apparatuses 200-1 to 200-n. The server 100 is also a computer for returning, to an applicable terminal, contents of a file serving as a backup objective, in accordance with an acquisition request for the file from the terminal apparatuses 200-1 to 200-n. The server 100 is also a computer for writing contents of a file serving as a backup obj ective in a tape drive 104 in accordance with a request for writing in a tape of a server from the terminal apparatuses 200-1 to 200-n. Further, the terminal apparatuses 200-1 to 200-n include memories 201-1 to 201-n, CPUs 202-1 to 202-n, and hard discs 203-1 to 203-n. These terminal apparatuses 200-1 to 200-n are computers used when a query request to a database controlling system surrounded by a dotted line in Fig. 1 is input and its result is output. Further, these terminal apparatuses 200-1 to 200-n are also computers used when a database file recorded in the hard disc 103 of the server 100 is inquired for and its result is written into the tape drives 240-1 to 240-n. In general, these terminal apparatuses 200-1 to 200-n include pointing devices such as keyboards 230-1 to 230-n, mice 220-1 to 220-n, etc., for inputting a query request, and displays 210-1 to 210-n for displaying a query resultant, respectively. In these terminal apparatuses 200-1 to 200-n, the file backup device 11, backup start/end instruction device 13, and query input/output device 14 of Fig. 1 are operated in accordance with a program. A backup file can be recorded in the tape drives 240-1 to 240-n. Further, the communication network 300 is a transmission channel connecting the terminal apparatuses 200-1 to 200-n to the server 100. A cable generally realizes such a transmission channel. In addition, TCP/IP is utilized as a communication protocol. However, if respective communication protocols of the server 100 and terminal apparatuses 200-1 to 200-n are the same with each other, a wireless LAN not using a cable and a network using a broadcast wave can be employed.

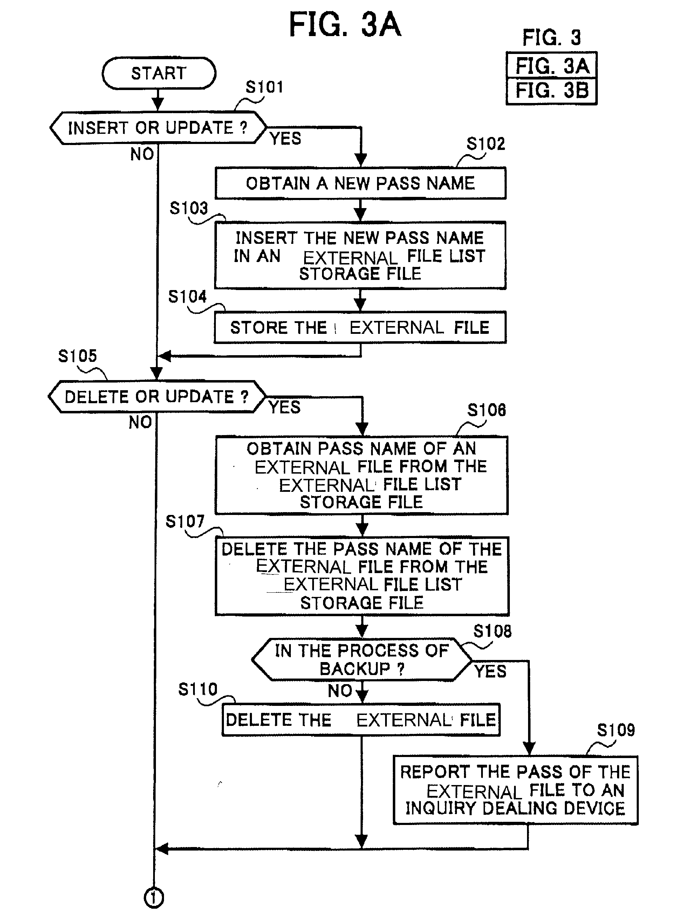

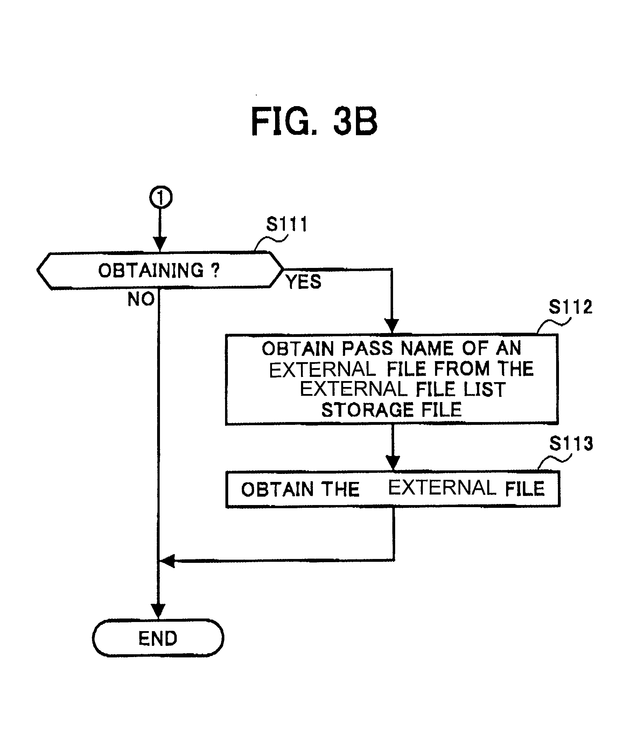

Fig. 3 is a flowchart illustrating a query process of an external file controlling device of Fig. 1. Access from the external file controlling device 20 of Fig. 1 to the external file list storage file 22 is always performed from the database file access device 16. Thus, similar to another database files, the simultaneous control is performed using the multiple version system. A process of updating the external file of Fig. 1 is realized by performing deletion and insertion processes. Further, a pass name assigned to the external file as identification information is unique, and is never used again when deleted. Since a query process for an external file is recorded in the log file 23 of Fig. 1, it can be cancelled using the log file access device 19 of Fig. 1 as similar to another database files when a transaction is aborted.

Now, a backup procedure is illustrated with reference to Figs. 1 and 3. Initially, the backup start/end instruction device 13 of Fig. 1 instructs the database controlling system to start backup. The query execution device 15 included in the database controlling system that has received the instruction determines if a query to the external file is an insertion process or an updating process including both deletion (for an old) and insertion (for a new) processes (in step S101). If it is the insertion or updating process, a new pass name is acquired from the external file controlling device 20 (Yes in step S101, and in step S102). Then, the new pass name is inserted in the external file list storage file 22 and is stored in the external file HD 24 (in steps S103 and S104). Then, it is determined if it is either a deletion or updating process (in step S105), if the query as to the external file is neither the insertion nor updating process, and after step S104. If the query is either the deletion or update process, a pass name to an external file is acquired from the external file list storage file 22, and the pass name to the external file is delete from the external file list storage file 22 (Yes in step S105, and in steps S106 and S107). Further, if the query of deletion is executed during backup, a pass name to the external file to be deleted is reported to the query processing device, and the external file is not deleted (Yes in step S108, and in step S109). In contrast, if it is not on the way of the backup, the external file is deleted (No in step S108, and in step S110). If the query to the external file is an acquiring process for acquiring a result of retrieval of a database, a pass name of an external file is acquired from the external file list storage file 22, and an external file is acquired (Yes in step S111, and in steps S112 and S113).

After performing a query process of the external file controlling device 20 in a manner as mentioned above, the file backup device 11 duplicates the entire files forming a base page region and external file in a non-volatile medium such as a tape. Since the external file is not buffered, an external file inserted during the backup is bucked up. However, since the external file list storage file 22 as one of database files is assured of consistency with another database files due to control of the multiple version system, consistency of database is assured even if an excessive external file is backed up.
The backup start/end instruction device 13 instructs the database controlling system to (complete) terminate the backup. The query execution device included in the database controlling system receiving the instruction performs the following processes.

First, the backup start/end instruction device 13 instructs the database controlling system to (start) terminate backup. The query execution device 15 of the database controlling system, which has received the instruction, causes the log file access device 19 to record a logical tag indicating (commencement) termination of backup in a logical log region, when the database controlling system is a type that generates a new version using a duplication source updating system. Then, the query execution device 15 instructs the database file access device 16 to write updating contents of the database file of the base page region, which are not yet written into a hard disc of a server. Even if a file forming a base page region is updated by an updating transaction during backup, in order to assure of consistency of backed up contents, the query executing device 15 deletes, if it exists, an external file that is deleted during the backup.

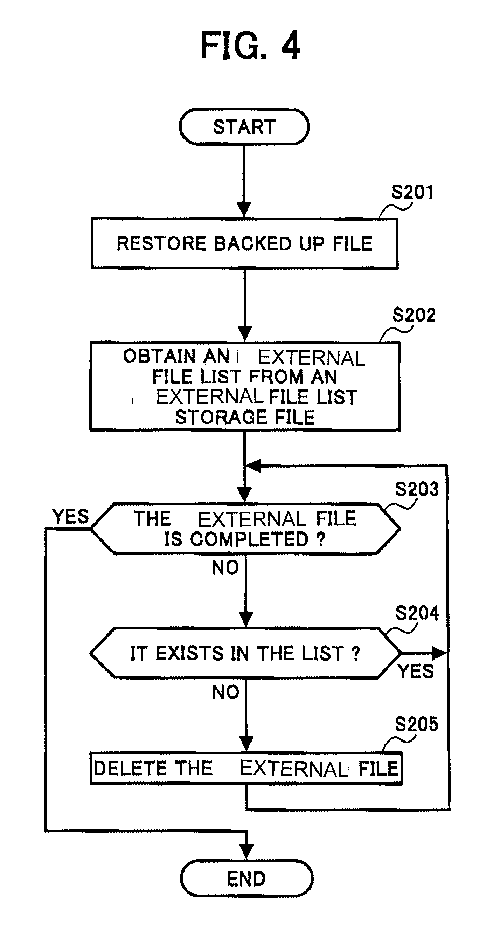

Fig. 4 is a flowchart illustrating a process of restoring a file that is backed up according to this embodiment. The file is backed up along with a flow of Fig. 3. The file restore device 12 of Fig. 1 duplicates the entire files forming a base page region and external files from a non-volatile medium such as a tape in a hard disc (in step S201) of a server. A query input/output device 14 instructs the query processing device 15 to perform a post restore processing. The query processing device 15 instructs the external file controlling device 20 to delete an unnecessary external file. The external file controlling device 20 acquires a list listing all of pass names of existing external files 24 from the external file list storage file 22 via a database file access device 16 (in step S202). When an external file is not end of a file and exists in a list, the external file list storage file 22 continuously performs reading of the external file, and deletes an external file if it does not exists in the file (No in step S203, No in step S204, and in step S205). Similar to another database files, since the simultaneous control of the multiple version system is performed, the file remains contents at the time of backup commencement time point. The external file controlling device 20 deletes an external file that does not exist in the list of the external files. In this way, the external file inserted during the backup can be deleted.

The present invention is not limited to the aforementioned embodiment, and a variety of modifications and replacements are possible as far as these are read by the claims.

### ADVANTAGE

As described above, the database controlling system of the present invention performs backup of a file forming a database by performing a transaction simultaneous control of a multiple version system when multiple transactions are updated to the newest version. Such a database controlling system includes an external file for storing data, such as long and massive data, not normally operated, an external file controlling device for controlling the external file, and an external file list storage file for storing a list of the external files. Further, together with a file of a base page region storing the oldest version of a page, both the external file and external file list storage file are directly accessed and backed up by a file backup device. Thus, even in a usual operational condition, such as when regular users attempt to execute multiple transactions, backup can be performed with a simple work schedule while directly accessing a file forming a database.

Further, according to the other invention of the database controlling system, it is characterized in that together with files of the base page region and the logical log region storing information for use in cancellation and re-execution of an operation with regard to a database, both an external file and external file list storage file are directly accessed and backed up by a file backup device. Thus, even in a usual operational condition such as when regular users execute multiple transactions , backup can be performed with a simple work schedule while directly accessing a file forming a database.

Further, according to yet another invention of the database controlling system, it is characterized in that, together with the entire files, the external file and external file list storage files are directly accessed and backed up by a file backup device. Thus, even in a usual operational condition where regular users execute multiple transactions, backup can be performed with a simple work schedule while directly accessing a file forming a database.

Further, by deleting an external file not existing in an external file list storage file after backup data is restored, an unnecessary external file added after commencement of backup can be deleted. As a result, a storage capacity of a hard disc or the like can be saved.

The external file used in the present invention is suitably of the type that practically stores application software, such as word processing software.

The database controlling system can comprise dedicated hardware or programmable hardware or a combination. The programmable hardware can comprise any suitable programmable device such as a general-purpose computer. In order to configure the programmable device to operate in accordance with the invention, suitable programme code can be provided to the device using any conventional carrier medium, e.g. floppy disk, CD-ROM, tape device, or programmable logic device or a transient carrier medium e.g. electrical, an optical, microwave or radio frequency signal. An example of the application of a transient signal is the downloading of programme code over a network e.g. the Internet. The present invention may be applied to any suitable database.

The present invention may in particular be applied to a patent journal retrieval system or the like in accordance with a relational database.

## Claims

1. A database controlling system for making backup of a database file formed by performing a transaction simultaneous execution control using a multiple version system, so as to update plural transactions to the newest version, said database controlling system comprising:
an external file (24) configured to store data, which file is intermittently operated;
an external file controlling device (20) configured to control the external file;
an external file list storage file (22) configured to store a list of the external files; and
a backup device (11) configured to directly access and perform backup of a base page of a database file, the external file and the external file list storage file, wherein the database file is arranged to store the oldest version of a page.

2. A database controlling system for making backup of a database file formed by performing a transaction simultaneous execution control using a multiple version system so as to update plural transactions to the newest version, said database controlling system comprising:
an external file configured to store data, which file is intermittently operated;
an external file controlling device (20) configured to control the external file (24); and
an external file list storage file (20) configured to store a list of the external files;
a backup device (11) configured to directly access and perform backup of a base page region of a database file, a logical log region arranged to store information for use in cancelling and re-executing an operation with regard to a database, the external file and the external file list storage file, wherein the database file is arranged to store the oldest version of a page.

3. A database controlling system for making backup of a database file formed by performing a transaction simultaneous execution control using a multiple version system so as to update plural transactions to the newest version, said database controlling system comprising:
an external file (24) configured to store data, which file (24) is intermittently operated;
an external file controlling device (20) configured to control the external file (24) and
an external file list storage file (22) configured to store a list of the external files;
a backup device configured to directly access and perform backup of all of the database files generated by the plural transactions, the external file, and the external file list storage file.

4. The database controlling system according to any one of claims 1 to 3, wherein an external file not listed in the external file storage file is deleted after backup data is restored.
